# EUROPÄISCHE PATENTSCHRIFT

(11) **EP 2 626 198 B1**
(45) Veröffentlichungstag und Bekanntmachung des Hinweises auf die Patenterteilung: **08.06.2016**
(21) Anmeldenummer: 13000387.4
(22) Anmeldetag: 26.01.2013
(51) Int. Cl.: B30B 11/08, B30B 15/02

(54) **Scheibenförmige Haltevorrichtung für Buchsen einer Rundläufertablettenpresse**
Disc-shaped holding device for the bushings of a rotary tablet press
Dispositif de retenue en forme de disque pour les douilles d'une presse rotative de production de comprimés

(30) Priorität: 08.02.2012 DE 102012002361
(43) Veröffentlichungstag der Anmeldung: 14.08.2013
(73) Patentinhaber: Fette Compacting GmbH, 21493 Schwarzenbek (DE)
(72) Erfinder: Meissner, Friedrich, 21493 Schwarzenbek (DE)
(74) Vertreter: Hauck Patentanwaltspartnerschaft mbB

(56) Entgegenhaltungen:
- DE-A1- 19 635 186
- DE-B4- 10 159 114
- DE-C- 305 018
- DE-U1-202005 001 556
- GB-A- 479 909
- JP-A- 2003 311 493
- JP-A- 2006 150 405
- NL-C- 7 332

## Beschreibung

Die Erfindung betrifft eine Matrizenscheibe für Matrizenbuchsen einer Rundläufertablettenpresse. Es sind segmentierte und nicht-segmentierte Matrizenscheiben bekannt. Eine segmentierte, also aus mehreren insbesondere ringförmigen Matrizensegmenten aufgebaute Matrizenscheibe für eine Rundläufertablettenpresse ist beispielsweise aus DE 101 59 114 B4 bekannt. Bei dieser Matrizenscheibe wirken die Ober- und Unterstempel unmittelbar mit Bohrungen der Matrizensegmente zusammen. Manchmal besteht der Wunsch, in den Matrizenbohrungen der Matrizenscheibe hülsenförmige Matrizenbuchsen anzuordnen, in denen im Betrieb durch die Ober- und Unterstempel pulverförmiges Material zu Tabletten verpresst wird. Die Befestigung solcher Matrizenbuchsen erfolgt beispielsweise durch Kleben, Einschrumpfen, Einpressen oder Verschrauben. Beim Verschrauben werden in der Regel radiale Befestigungsschrauben an die Matrizenbuchsen angelegt. Dies ist beispielsweise bekannt aus JP 2006-150405 A. Die Anordnung von Matrizenbuchsen in Matrizenscheiben von Tablettenpressen ist auch bekannt aus GB 479 909 A, DE 196 35 186 A1, JP 2003-311493 A oder DE 305 018 C.

Die bekannten Befestigungsarten für die Matrizenbuchsen halten den hohen im Betrieb auftretenden Kräften allerdings nicht immer zuverlässig stand. Dies gilt besonders für nicht formschlüssige Verbindungen. Beispielsweise bei verschraubten Buchsen treten aufgrund offener Gewinde, Spalte und Hohlräumen Schwierigkeiten hinsichtlich der Reinigung von im Betrieb unweigerlich auftretendem pulverförmigen Material auf. Geklebte Buchsen benötigen einen Klebstoff, der insbesondere bei der Herstellung von Tabletten für den Pharmabereich hohe Zulassungsanforderungen, beispielsweise nach der US Food and Drug Administration (FDA), erfüllen muss. Darüber hinaus entsteht durch die bekannten Befestigungsarten ein erhöhter Platzbedarf, der zu Einschränkungen hinsichtlich der Anzahl der unterzubringenden Matrizenbuchsen und der Größe der herzustellenden Tablettenformate führt. Darüber hinaus sind die bekannten Matrizenscheiben bzw. Matrizensegmente je nach Befestigungsart für die Matrizenbuchsen nur einseitig verwendbar.

Ausgehend von dem erläuterten Stand der Technik liegt der Erfindung die Aufgabe zugrunde, eine Matrizenscheibe der eingangs genannten Art bereitzustellen, in der Buchsen in einfacher, kompakter und sicherer Weise befestigt werden können.

Die Erfindung löst diese Aufgabe durch den Gegenstand von Anspruch 1. Vorteilhafte Ausgestaltungen finden sich in den abhängigen Ansprüchen, der Beschreibung und den Figuren.

Die Erfindung löst die Aufgabe durch eine Matrizenscheibe für Matrizenbuchsen einer Rundläufertablettenpresse, wobei die Matrizenscheibe aus zwei miteinander verbundenen Scheibenhälften gebildet ist, in denen jeweils eine Mehrzahl von Bohrungen ausgebildet ist, die bei miteinander verbundenen Scheibenhälften miteinander fluchten und so Aufnahmebohrungen bilden, in denen jeweils eine Buchse angeordnet ist, wobei die Buchsen zwischen den miteinander verbundenen Scheibenhälften formschlüssig gehalten sind.

Die erfindungsgemäße Matrizenscheibe kann beispielsweise eine kreisringförmige Form besitzen. Im Betrieb der Rundläuferpresse wird die Matrizenscheibe um ihre Achse, die in der Regel vertikal verläuft, angetrieben. Erfindungsgemäß ist die Matrizenscheibe horizontal unterteilt in zwei Scheibenhälften, die in geeigneter Weise miteinander zu der Matrizenscheibe verbunden werden. Die Scheibenhälften besitzen jeweils eine Vielzahl von axialen Bohrungen, die üblicherweise entlang einer Kreisbahn hintereinander angeordnet sind. Im zusammengesetzten Zustand der Scheibenhälften bilden die Bohrungen der einen Scheibenhälfte jeweils gemeinsam mit den Bohrungen der anderen Scheibenhälfte eine Vielzahl axialer Aufnahmebohrungen, insbesondere Matrizenbohrungen. Erfindungsgemäß ist in den Aufnahmebohrungen außerdem jeweils eine hülsenförmige eine Matrizenbuchse angeordnet, wobei in den Buchsen im späteren Betrieb pulverförmiges Material zu Tabletten verpresst wird. Die Buchsen sind jeweils zwischen den miteinander verbundenen Scheibenhälften formschlüssig gehalten, beispielsweise eingeklemmt. Die Buchsen können sich vollständig durch die beiden Scheibenhälften hindurch erstrecken. Sie können beispielsweise eine zylindrische Form besitzen.

Durch die erfindungsgemäße Teilung der Matrizenscheibe in zwei Scheibenhälften und die formschlüssige Aufnahme der Buchsen zwischen diesen Scheibenhälften sind die Buchsen insbesondere gegen eine Bewegung in ihrer axialen Richtung gesichert. Es liegt also ein Formschluss in axialer Richtung vor, der den sehr hohen im Betrieb einer Rundläufertablettenpresse auftretenden Kräften sicher standhält. Darüber hinaus wird durch die erfindungsgemäße Befestigung der Buchsen nur ein geringer Platz im Randbereich der Matrizenscheibe benötigt. Hierdurch ist eine höhere Anzahl von Aufnahmebohrungen und Buchsen möglich. Außerdem besteht eine größere Flexibilität hinsichtlich der hergestellten Tablettenformate.

Darüber hinaus führt die erfindungsgemäße Befestigung der Buchsen durch eine Teilung der Matrizenscheibe in horizontaler Richtung zu Einsparungen in der Fertigung. So kann die Einbringung der Buchsen bereits im Rohzustand der Bauteile erfolgen. Eine Bearbeitung der Buchsen, insbesondere ihrer Durchgangsbohrungen für die Aufnahme des zu verpressenden pulverförmigen Materials und/oder ihre Oberflächen, kann im bereits in die Scheibenhälften eingebauten Zustand erfolgen. Außerdem ist die Reinigung vereinfacht, da keine Öffnungen bestehen, wie sie beispielsweise bei verschraubten Buchsen vorliegen. Die Buchsen können trotzdem gegen andere Buchsen ausgetauscht werden, indem die Scheibenhälften voneinander gelöst werden. Schließlich ist aufgrund der erfindungsgemäßen Befestigung der Buchsen auch eine beidseitige Verwendung der Matrizenscheibe denkbar.

Nach einer Ausgestaltung kann die Matrizenscheibe aus mehreren Scheibensegmenten aufgebaut sein, wobei die Scheibenhälften jeweils aus mehreren Segmenthälften gebildet sind, wobei jeweils zwei miteinander verbundene Segmenthälften jeweils ein Scheibensegment bilden. Bei dieser Ausgestaltung ist die Matrizenscheibe aus mehreren beispielsweise ringförmigen Scheibensegmenten, insbesondere Matrizensegmenten, gebildet. Die Scheibensegmente können jeweils einen Kreisringabschnitt bilden, so dass sie im zusammengesetzten Zustand eine kreisringförmige Matrizenscheibe bilden. In den die Scheibensegmente bildenden Segmenthälften ist dann jeweils eine Mehrzahl von Bohrungen ausgebildet, die bei miteinander verbundenen Segmenthälften miteinander fluchten und so die Aufnahmebohrungen bilden, in denen jeweils eine Buchse angeordnet ist. Die Buchsen sind also zwischen den miteinander verbundenen Segmenthälften formschlüssig gehalten.

Die Buchsen weisen jeweils einen Bund auf, der in einer dem Bund entsprechenden Aufnahme aufgenommen ist, insbesondere formschlüssig. Die Bünde können jeweils über den Umfang der Buchsen verlaufen, beispielsweise etwa mittig. Sie können stufenförmig ausgebildet sein. Die Aufnahmen können jeweils in mindestens einer der miteinander verbundenen Scheibenhälften bzw. Segmenthälften ausgebildet sein. Die Aufnahmen können insbesondere jeweils in beiden Scheibenhälften bzw. Segmenthälften ausgebildet sein, beispielsweise im Bereich ihrer einander zugewandten Bohrungsenden. Es ist jedoch auch möglich, dass die Aufnahmen nur in einer der beiden miteinander verbundenen Scheibenhälften bzw. Segmenthälften ausgebildet sind. Die Aufnahmen sind jeweils durch eine stufenartige Erweiterung, insbesondere eine Querschnitts- bzw. Durchmessererweiterung, der Bohrungen jeweils einer der miteinander verbundenen Scheibenhälften bzw. Segmenthälften im Bereich ihres der anderen Scheibenhälfte bzw. Segmenthälfte zugewandten Bohrungsendes ausgebildet.

Es ist möglich, dass die Scheibenhälften bzw. Segmenthälften jeweils direkt miteinander verbunden werden. Es ist jedoch auch möglich, zwischen den Scheibenhälften bzw. Segmenthälften jeweils mindestens eine Zwischenschicht anzuordnen. Es versteht sich, dass die Zwischenschichten dann ebenfalls mit den fluchtenden Bohrungen der Scheibenhälften bzw. Segmenthälften fluchtende Bohrungen besitzen, so dass die Buchsen auch durch die Zwischenschicht hindurch eingesetzt werden können. Die Zwischenschichten können jeweils eine Dichtung zwischen den Scheibenhälften bzw. Segmenthälften bilden. Insbesondere verhindern sie einen Luftspalt zwischen den Scheibenhälften bzw. Segmenthälften. In dieser Hinsicht ist es vorteilhaft, wenn die Zwischenschichten elastisch sind. Beispielsweise können die Zwischenschichten aus einem Kunststoff oder aus einem Metallwerkstoff, insbesondere einem weicheren Metallwerkstoff als einem Metallwerkstoff der Scheibenhälften bzw. Segmenthälften, bestehen.

Die miteinander verbundenen Scheibenhälften bzw. Segmenthälften können dieselbe Dicke besitzen. Es kann also eine mittige Teilung der scheibenförmigen Haltevorrichtung bzw. Scheibensegmente in die Scheibenhälften bzw. Segmenthälften vorliegen. Alternativ können die miteinander verbundenen Scheibenhälften bzw. Segmenthälften unterschiedliche Dicken besitzen. Die Matrizenscheibe bzw. die Scheibensegmente können also auch außermittig geteilt sein.

Die Scheibenhälften bzw. Segmenthälften können jeweils lösbar miteinander verbunden sein. Nach einer weiteren Ausgestaltung können die Scheibenhälften bzw. Segmenthälften jeweils kraftschlüssig miteinander verbunden sein. Dies kann beispielsweise durch eine Schraubverbindung oder durch eine Nietverbindung erfolgen. Zusätzlich oder alternativ können die Scheibenhälften bzw. Segmenthälften auch jeweils stoffschlüssig miteinander verbunden sein, beispielsweise durch eine Schweißverbindung.

Nach einer weiteren Ausgestaltung können Mittel zum Verhindern einer Drehung der Buchsen in den Aufnahmebohrungen vorgesehen sein. Bei dieser Ausgestaltung sind die Buchsen also gegen ein Drehen um ihre bzw. die Achse der Aufnahmebohrungen gesichert. Erreicht werden kann dies zum Beispiel dadurch, dass die Außenseiten der Buchsen und die Innenseiten der Aufnahmebohrungen jeweils zumindest abschnittsweise nicht rotationssymmetrisch sind. Beispielsweise auf den Außenseiten der Buchsen kann jeweils mindestens ein in axialer Richtung verlaufender Vorsprung oder jeweils mindestens eine in axialer Richtung verlaufende Ausnehmung vorgesehen sein, wobei auf den Innenseiten der Aufnahmebohrungen jeweils mindestens eine in axialer Richtung verlaufende Ausnehmung oder jeweils mindestens ein in axialer Richtung verlaufender Vorsprung vorgesehen ist, wobei der mindestens eine Vorsprung und die mindestens eine Ausnehmung miteinander in Eingriff stehen. An den Buchsen oder den ihnen zugeordneten Aufnahmebohrungen ist bei dieser Ausgestaltung also jeweils mindestens eine axiale Passfeder vorgesehen, die in einer entsprechenden axialen Nut der Aufnahmebohrungen bzw. der Buchsen aufgenommen ist. Es besteht bei dieser Ausgestaltung also ebenfalls ein Formschluss in Drehrichtung der Buchsen um ihre Achse. Auch möglich ist es beispielsweise, dass ein Bund der Buchsen jeweils eine Abflachung aufweist, und dass eine Aufnahme für den Bund der Buchsen jeweils mindestens eine korrespondierende Abflachung aufweist. Auch bei dieser Ausgestaltung wird durch ein Ineinandergreifen der Abflachungen im montierten Zustand der Buchsen ein Formschluss in Drehrichtung der Buchsen um ihre Achse erreicht.

Die Erfindung betrifft auch einen Rotor für eine Rundläuferpresse, umfassend eine erfindungsgemäße Matrizenscheibe, die beispielsweise mittels einer Befestigungsvorrichtung an dem Rotor befestigt ist, und umfassend Ober- und Unterstempel, die im Betrieb der Rundläufertablettenpresse mit den Buchsen zusammenwirken, um darin gefülltes pulverförmiges Pressmaterial zu Tabletten zu verpressen. Es ist möglich, dass beide Scheibenhälften bzw. sämtliche Segmenthälften jeweils lösbar an dem Rotor befestigt sind. Es ist jedoch auch möglich, dass eine der Scheibenhälften bzw. die diese Scheibenhälfte bildenden Segmenthälften unlösbar mit dem Rotor verbunden sind, während die andere der Scheibenhälften bzw. die diese Scheibenhälfte bildenden Segmenthälften lösbar mit dem Rotor verbunden sind. Bei dieser Ausgestaltung ist also die obere oder die untere Scheibenhälfte fest mit dem Rotor verbunden, während die jeweils andere der Scheibenhälften zum Wechseln von Buchsen von dem Rotor gelöst werden kann.

Ausführungsbeispiele der Erfindung werden nachfolgend anhand von Figuren näher erläutert. Es zeigen schematisch:
- Fig. 1: ein Matrizensegment einer erfindungsgemäßen Matrizenscheibe nach einem ersten Ausführungsbeispiel in einer perspektivischen Ansicht,
- Fig. 2: das Matrizensegment aus Fig. 1 in einer weiteren perspektivischen Ansicht,
- Fig. 3: das Matrizensegment aus Fig. 1 in einer Ansicht von oben,
- Fig. 4: eine perspektivische Schnittansicht durch das Matrizensegment aus Fig. 1,
- Fig. 5: eine weitere perspektivische Schnittansicht des Matrizensegments aus Fig. 1,
- Fig. 6: eine Querschnittsansicht des Matrizensegments aus Fig. 1,
- Fig. 7: ein Matrizensegment einer erfindungsgemäßen Matrizenscheibe nach einem zweiten Ausführungsbeispiel in einer perspektivischen Schnittansicht,
- Fig. 8: ein Matrizensegment einer Matrizenscheiben nach einem weiteren -nicht erfindungsgemäßen- Beispiel in einer perspektivischen Schnittansicht, und
- Fig. 9: einen Ausschnitt einer erfindungsgemäßen Segmenthälfte nach einem weiteren Ausführungsbeispiel in einer perspektivischen Ansicht.

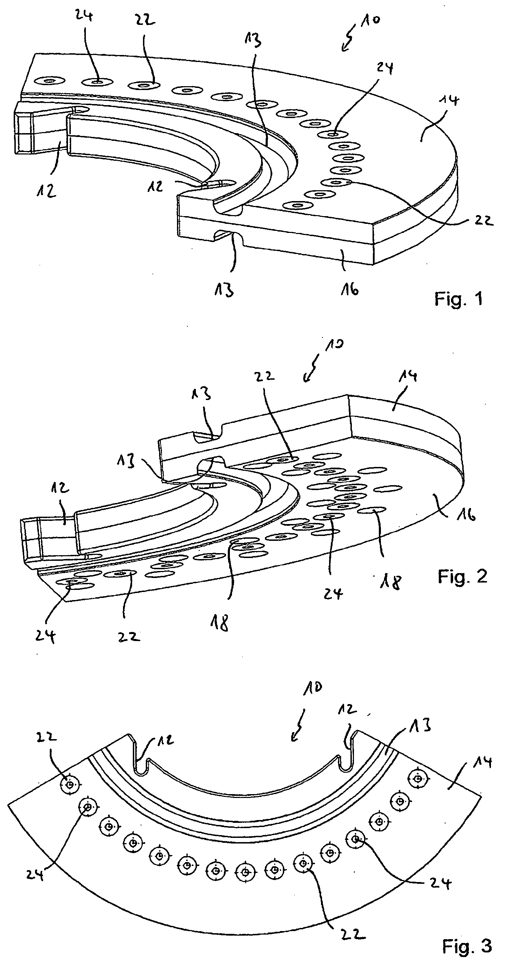

Soweit nichts anderes angegeben ist, bezeichnen in den Figuren gleiche Bezugszeichen gleiche Gegenstände. In den Figuren 1 bis 6 ist ein einen Kreisringabschnitt einer erfindungsgemäßen Matrizenscheibe bildendes Matrizensegment 10 gezeigt. Die in den Figuren dargestellte erfindungsgemäße Matrizenscheibe umfasst eine Mehrzahl solcher Matrizensegmente 10, die zur Bildung der erfindungsgemäßen kreisringförmigen Matrizenscheibe in an sich bekannter Weise zusammengesetzt werden. Die übrigen, nicht gezeigten Matrizensegmente der Matrizenscheibe sind identisch zu dem in den Figuren 1 bis 6 gezeigten Matrizensegment ausgebildet. An seinem inneren Umfang besitzt das Matrizensegment 10 Befestigungsmittel 12 zum Befestigen der Matrizensegmente an einem Rotor einer Rundläuferpresse. Da solche Befestigungsmittel an sich bekannt sind, soll hierauf nicht näher eingegangen werden. Darüber hinaus besitzt das Matrizensegment 10 eine obere und untere jeweils kreisförmig umlaufende Führungsnut 13.

Das Matrizensegment 10 weist eine obere Segmenthälfte 14 und eine untere Segmenthälfte 16 auf. Wie insbesondere in den Figuren 1 und 2 zu erkennen, sind die Segmenthälften 14, 16 gleich dick und auch im Übrigen weitgehend symmetrisch ausgebildet. Die Segmenthälften 14, 16 sind durch eine Mehrzahl von durch die untere Segmenthälfte 16 hindurch in die obere Segmenthälfte 14 eingeschraubte Gewindebolzen 18 lösbar miteinander verbunden. Beispielsweise in Fig. 2 ist zu erkennen, dass die Verschraubung durch eine Vielzahl von entlang zweier Kreisbahnen mit unterschiedlichem Radius angeordneter Gewindebolzen 18 erfolgt. Zumindest die obere Segmenthälfte 14 besitzt den Gewindebolzen 18 zugeordnete Gewindebohrungen 20, in denen die Gewindebolzen 18 gehalten sind.

Darüber hinaus weisen die Segmenthälften 14, 16 jeweils eine Vielzahl von entlang einer Kreisbahn hintereinander angeordneten axialen Bohrungen 21 auf, die im miteinander verbundenen Zustand der Segmenthälften 14, 16 miteinander fluchten und durch die beiden Segmenthälften 14, 16 in axialer Richtung hindurch verlaufende Matrizenbohrungen bilden. Diese axiale Richtung verläuft in der Regel in vertikaler Richtung. In die Matrizenbohrungen ist jeweils eine hülsenförmige zylindrische Matrizenbuchse 22 eingesetzt. Die Matrizenbuchsen 22 erstrecken sich jeweils in axialer Richtung durch das gesamte Matrizensegment 10. Sie besitzen jeweils eine zentrale Durchgangsöffnung 24, in der im Betrieb der Rundläufertablettenpresse durch Ober- und Unterstempel in an sich bekannter Weise Tabletten verpresst werden.

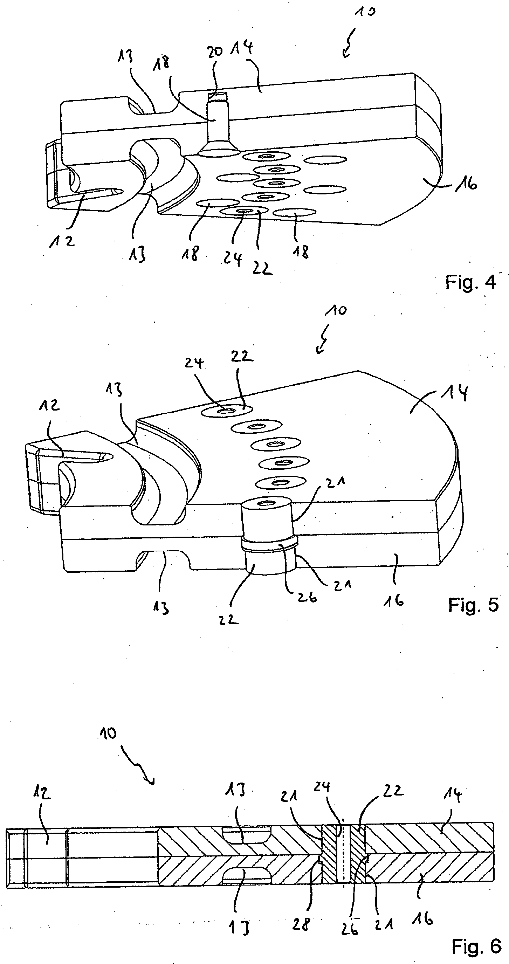

Anhand der Figuren 5 und 6 soll erläutert werden, wie die Matrizenbuchsen 22 in dem Matrizensegment 10 gehalten sind. In den Figuren 5 und 6 ist zu erkennen, dass die Matrizenbuchsen 22 jeweils einen über ihren Umfang verlaufenden stufenförmigen Bund 26 aufweisen. Insbesondere in Fig. 6 ist zu erkennen, dass die Bohrungen 21 der unteren Segmenthälfte 16 an ihren der oberen Segmenthälfte 14 zugeordneten Enden jeweils eine stufenartige Erweiterung 28 aufweisen. Im miteinander verbundenen Zustand der Segmenthälften 14, 16 werden die Bünde 26 der Matrizenbuchsen 22 jeweils in einer stufenartigen Erweiterung 28 formschlüssig aufgenommnen. Hierdurch sind die Matrizenbuchsen 22 formschlüssig zwischen den Segmenthälften 14, 16 gehalten, wobei sie insbesondere gegen eine Bewegung in axialer Richtung gesichert sind. Darüber hinaus kann vorgesehen sein, dass die Matrizenbuchsen 22 eine in axialer Richtung verlaufende Passfeder oder eine in axialer Richtung verlaufende Nut aufweisen. In den durch die Bohrungen 21 gebildeten Matrizenbohrungen kann dann jeweils eine entsprechende axiale Nut oder eine entsprechende axiale Passfeder vorgesehen sein, wobei die Vorsprünge jeweils mit einer Nut in Eingriff stehen, so dass die Matrizenbuchsen 22 auch gegen eine Drehung um ihre Achse gesichert sind.

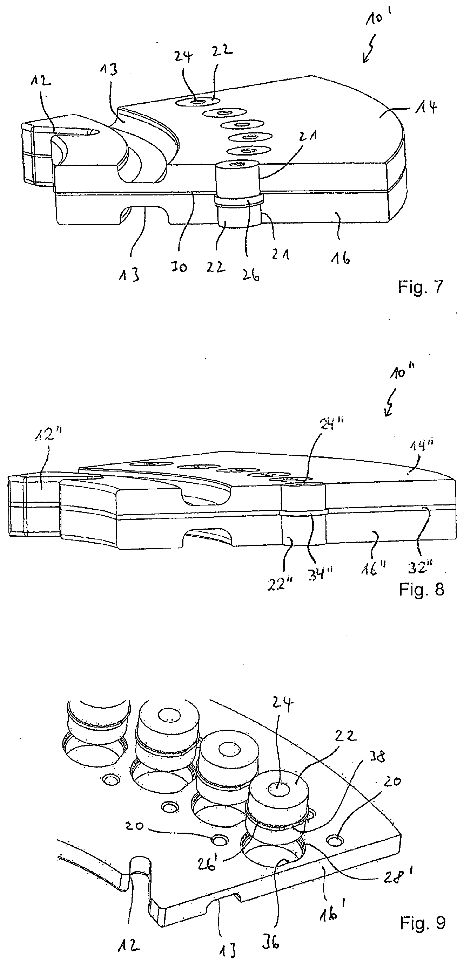

In Fig. 7 ist ein zweites Ausführungsbeispiel eines Matrizensegments 10' einer erfindungsgemäßen Matrizenscheibe in einer perspektivischen Schnittansicht entsprechend der Ansicht in Fig. 5 gezeigt. Dieses Matrizensegment 10' entspricht weitgehend dem in den Figuren 1 bis 6 gezeigten Matrizensegment. Wiederum weisen die Matrizenbuchsen 22 jeweils einen über ihren Umfang verlaufenden Bund 26 auf, wobei die Bünde 26 jeweils in einer entsprechenden stufenartigen Erweiterung der Bohrung 21 der unteren Segmenthälfte 16 formschlüssig aufgenommen sind. Im Unterschied zu dem Ausführungsbeispiel nach den Figuren 1 bis 6 ist zwischen den Segmenthälften 14, 16 allerdings eine dünne elastische Zwischenschicht 30 vorgesehen. Die Zwischenschicht besitzt ebenfalls Bohrungen, die jeweils mit den Bohrungen 21 der Segmenthälften 14, 16 fluchten. Die Zwischenschicht 30 kann beispielsweise aus einem Kunststoff bestehen. Sie stellt sicher, dass zwischen den über die Schraubverbindung kraftschlüssig miteinander verbundenen Segmenthälften 14, 16 keine unerwünschten Luftspalte auftreten.

In Fig. 8 ist ein weiteres Beispiel eines Matrizensegments 10" einer Matrizenscheibe in einer ähnlichen Schnittansicht wie in Fig. 7 gezeigt. Auch dieses Matrizensegment 10" ist weitgehend identisch ausgebildet zu dem in den Figuren 1 bis 6 gezeigten Matrizensegment 10. Wie das Matrizensegment 10' aus Fig. 7 weist allerdings auch das Matrizensegment 10" nach Fig. 8 eine elastische Zwischenschicht 32" zwischen der oberen und unteren Segmenthälfte 14", 16" auf. Die Zwischenschicht 32" bei dem Beispiel nach Fig. 8 ist dabei etwas dicker als die Zwischenschicht 30 bei dem Ausführungsbeispiel nach Fig. 7. Auch die Zwischenschicht 32" kann beispielsweise aus einem Kunststoff bestehen und erfüllt dieselbe Funktion wie die Zwischenschicht 30 aus Fig. 7. Bei dem Beispiel nach Fig. 8 sind allerdings im Unterschied zu den Ausführungsbeispielen aus den Figuren 1 bis 7 keine Erweiterungen zur Aufnahme von Bünden der Matrizenbuchsen 22" in einer der Segmenthälften 14", 16" ausgebildet. Stattdessen besitzen die mit den Bohrungen 21" der Segmenthälften 14", 16" ausgerichteten Bohrungen der Zwischenschicht 32" jeweils einen größeren Durchmesser als die Bohrungen 21" der Segmenthälften 14", 16". In dieser durch die Zwischenschicht 32" gebildeten Durchmessererweiterung der Matrizenbohrungen ist jeweils ein schmaler ausgebildeter Bund 34" der Matrizenbuchsen 22" formschlüssig gehalten.

In Fig. 9 ist eine untere Segmenthälfte 16' nach einem weiteren Ausführungsbeispiel gezeigt. Sie kann beispielsweise mit der oben erläuterten Segmenthälfte 14 durch die Bohrungen 20 verschraubt werden. Die Segmenthälfte 16' entspricht weitgehend der oben erläuterten Segmenthälfte 16. Im Unterschied zu dieser besitzt die Segmenthälfte 16' jedoch Aufnahmen 28' mit jeweils einer Abflachung 36 an ihrer Innenfläche. Die Matrizenbuchsen 22 besitzen jeweils einen Bund 26' mit einer korrespondierenden Abflachung 38 an seiner Außenfläche. Sowohl die Außenfläche des Bundes 26' als auch die Innenfläche der Aufnahme 28' weichen also abschnittsweise von ihrer Kreisform ab und sind somit nicht rotationssymmetrisch. Dadurch können die Matrizenbuchsen 22 nur in einer vorgegebenen Drehstellung in die Matrizenbohrungen eingesetzt werden. Im eingesetzten Zustand sorgen die ineinander greifenden Abflachungen 36, 38 für einen Formschluss in Drehrichtung, der ein Drehen der Matrizenbuchsen 22 in den Matrizenbohrungen wiederum verhindert.

Bei allen Ausführungsbeispielen sind die Matrizenbuchsen 22 in der erläuterten Weise formschlüssig zwischen den Segmenthälften 14, 16, 16' gehalten und damit auch für sehr hohe im Betrieb auftretende Kräfte gesichert. Durch die erfindungsgemäße formschlüssige Aufnahme der Matrizenbuchsen wird nur sehr wenig Platz beansprucht, insbesondere im Randbereich der Matrizensegmente. Die Fertigung und Montage sowie Reinigung werden vereinfacht und ein Wechsel der Matrizenbuchsen 22 gegen andere Matrizenbuchsen ist möglich.

## Patentansprüche

1. Matrizenscheibe für Matrizenbuchsen einer Rundläufertablettenpresse, wobei die Matrizenscheibe aus einer oberen Scheibenhälfte und einer mit der oberen Scheibenhälfte verbundenen unteren Scheibenhälfte gebildet ist, in denen jeweils eine Mehrzahl von Bohrungen (21) ausgebildet ist, die bei miteinander verbundenen Scheibenhälften miteinander fluchten und so Aufnahmebohrungen bilden, in denen jeweils eine Buchse (22) angeordnet ist, wobei die Buchsen (22) zwischen den miteinander verbundenen Scheibenhälften formschlüssig gehalten und dadurch gegen eine Bewegung in ihrer axialen Richtung gesichert sind, wobei die Buchsen (22) jeweils einen Bund (26, 26') aufweisen, der in einer dem Bund (26, 26') entsprechenden Aufnahme (28, 28') aufgenommen ist, **dadurch gekennzeichnet, dass** die Aufnahmen (28, 28') jeweils durch eine stufenartige Erweiterung (28, 28') des der anderen Scheibenhälfte zugewandten Endes der Bohrungen (21) jeweils einer der miteinander verbundenen Scheibenhälften ausgebildet sind.

2. Matrizenscheibe nach Anspruch 1, **dadurch gekennzeichnet, dass** die Matrizenscheibe aus mehreren Scheibensegmenten (10, 10') aufgebaut ist, wobei die Scheibenhälften jeweils aus mehreren Segmenthälften (14, 16, 16') gebildet sind, wobei jeweils zwei miteinander verbundene Segmenthälften (14, 16, 16') jeweils ein Scheibensegment (10, 10') bilden.

3. Matrizenscheibe nach einem der Ansprüche 1 oder 2, **dadurch gekennzeichnet, dass** die Aufnahmen (28, 28') jeweils in mindestens einer der miteinander verbundenen Scheibenhälften ausgebildet sind.

4. Matrizenscheibe nach einem der vorhergehenden Ansprüche, **dadurch gekennzeichnet, dass** zwischen den Scheibenhälften jeweils mindestens eine Zwischenschicht (30) angeordnet ist.

5. Matrizenscheibe nach Anspruch 4, **dadurch gekennzeichnet, dass** die mindestens eine Zwischenschicht (30) jeweils eine Dichtung zwischen den Scheibenhälften bildet.

6. Matrizenscheibe nach einem der Ansprüche 4 oder 5, **dadurch gekennzeichnet, dass** die mindestens eine Zwischenschicht (30) elastisch ist.

7. Matrizenscheibe nach einem der Ansprüche 4 bis 6 **dadurch gekennzeichnet, dass** die mindestens eine Zwischenschicht (30) aus einem Kunststoff oder einem Metallwerkstoff besteht.

8. Matrizenscheibe nach einem der Ansprüche 4 bis 7, **dadurch gekennzeichnet, dass** die Aufnahmen (28, 28') jeweils in der mindestens einen Zwischenschicht (30, 32) ausgebildet sind.

9. Matrizenscheibe nach Anspruch 8, **dadurch gekennzeichnet, dass** die Aufnahmen (28, 28') jeweils durch eine Aussparung in der mindestens einen Zwischenschicht (30, 32) ausgebildet sind.

10. Matrizenscheibe nach einem der Ansprüche 1 bis 9, **dadurch gekennzeichnet, dass** die miteinander verbundenen Scheibenhälften dieselbe Dicke besitzen.

11. Matrizenscheibe nach einem der Ansprüche 1 bis 9, **dadurch gekennzeichnet, dass** die miteinander verbundenen Scheibenhälften unterschiedliche Dicken besitzen.

12. Matrizenscheibe nach einem der vorhergehenden Ansprüche, **dadurch gekennzeichnet, dass** die Scheibenhälften lösbar miteinander verbunden sind.

13. Matrizenscheibe nach einem der vorhergehenden Ansprüche, **dadurch gekennzeichnet, dass** die Scheibenhälften kraftschlüssig miteinander verbunden sind.

14. Matrizenscheibe nach Anspruch 13, **dadurch gekennzeichnet, dass** die Scheibenhälften durch eine Schraubverbindung oder eine Nietverbindung miteinander verbunden sind.

15. Matrizenscheibe nach einem der vorhergehenden Ansprüche, **dadurch gekennzeichnet, dass** die Scheibenhälften stoffschlüssig miteinander verbunden sind.

16. Matrizenscheibe nach Anspruch 15, **dadurch gekennzeichnet, dass** die Scheibenhälften durch eine Schweißverbindung miteinander verbunden sind.

17. Matrizenscheibe nach einem der vorhergehenden Ansprüche, **dadurch gekennzeichnet, dass** weiterhin Mittel zum Verhindern einer Drehung der Buchsen (22) in den Aufnahmebohrungen vorgesehen sind.

18. Matrizenscheibe nach Anspruch 17, **dadurch gekennzeichnet, dass** die Außenseiten der Buchsen (22) und die Innenseiten der Aufnahmebohrungen jeweils zumindest abschnittsweise nicht rotationssymmetrisch sind.

19. Matrizenscheibe nach einem der Ansprüche 17 oder 18, **dadurch gekennzeichnet, dass** auf den Außenseiten der Buchsen (22) jeweils mindestens ein in axialer Richtung verlaufender Vorsprung oder jeweils mindestens eine in axialer Richtung verlaufende Ausnehmung vorgesehen ist, und dass auf den Innenseiten der Aufnahmebohrungen jeweils mindestens eine in axialer Richtung verlaufende Ausnehmung oder jeweils mindestens ein in axialer Richtung verlaufender Vorsprung vorgesehen ist, wobei der mindestens eine Vorsprung und die mindestens eine Ausnehmung miteinander in Eingriff stehen.

20. Matrizenscheibe nach einem der Ansprüche 17 bis 19, **dadurch gekennzeichnet, dass** ein Bund (26') der Buchsen (22) jeweils eine Abflachung (38) aufweist und, dass eine Aufnahme (28') für den Bund (26') der Buchsen (22) jeweils mindestens eine korrespondierende Abflachung (36) aufweist.

21. Rotor für eine Rundläufertablettenpresse, umfassend eine Matrizenscheibe nach einem der vorhergehenden Ansprüche, die an dem Rotor befestigt ist, und umfassend Ober- und Unterstempel, die im Betrieb der Rundläufertablettenpresse mit den Buchsen (22) zusammenwirken, um darin gefülltes pulverförmiges Pressmaterial zu Tabletten zu verpressen.

22. Rotor nach Anspruch 21, **dadurch gekennzeichnet, dass** eine der Scheibenhälften unlösbar mit dem Rotor verbunden ist und die andere der Scheibenhälften lösbar mit dem Rotor verbunden ist.

## Claims

1. A die disc for die sockets of a rotary tablet press, wherein the die disc is formed by an upper disc half and a lower disc half which is connected to the upper disc half, in each of which is formed a plurality of bores (21), which are aligned to each other when the disc halves are connected and thus form accommodation bores in which one socket (22) is arranged at a time, wherein the sockets (22) are held between the connected disc halves by positive fit and are protected against a movement in their axial direction through this, wherein the sockets (22) each have a collar (26, 26') which is accommodated in an accommodation (28, 28') corresponding to the collar (26, 26'), **characterised in that** the accommodations (28, 28') are each one formed by a step-like extension (28, 28') of the end of the bores (21) facing the other disc half, of one at a time of the disc halves that are connected to each other.

2. The die disc according to claim 1, **characterised in that** die disc is made of several disc segments (10, 10'), wherein the disc halves are formed of several segment halves (14, 16, 16') at a time, wherein two interconnected segment halves (14, 16, 16') form one disc segment (10, 10') at a time.

3. A die disc according to one of claims 1 or 2, **characterised in that** the accommodations (28, 28') are formed in at least one of the interconnected disc halves.

4. A die disc according to any one of the preceding claims, **characterised in that** at least one interlayer (30) at a time is arranged between the disc halves.

5. The die disc according to claim 4, **characterised in that** the at least one interlayer (30) forms a seal between the disc halves.

6. A die disc according to one of claims 4 or 5, **characterised in that** the at least one interlayer (30) is elastic.

7. A die disc according to any one of claims 4 to 6, **characterised in that** the at least one interlayer (30) consists of a plastic material or a metal material.

8. A die disc according to any one of claims 4 to 7, **characterised in that** the accommodations (28, 28') are formed in the at least one interlayer (30, 32).

9. The die disc according to claim 8, **characterised in that** the accommodations (28, 28') are formed by one recess in the at least one interlayer (30, 32) at a time.

10. A die disc according to any one of claims 1 to 9, **characterised in that** the interconnected disc halves have the same thickness.

11. A die disc according to any one of claims 1 to 9, **characterised in that** the interconnected disc halves have different thicknesses.

12. The die disc according to any of the preceding claims, **characterised in that** the disc halves are interconnected in a detachable manner.

13. The die disc according to any of the preceding claims, **characterised in that** the disc halves are interconnected by force locking.

14. The die disc according to claim 13, **characterised in that** the disc halves are interconnected by a screw connection or a rivet connection.

15. The die disc according to any of the preceding claims, **characterised in that** the disc halves are interconnected by a substance-to-substance bond.

16. The die disc according to claim 15, **characterised in that** the disc halves are interconnected by a welded joint.

17. The die disc according to any of the preceding claims, **characterised in that** means for preventing a rotation of the sockets (22) in the accommodation bores are provided in addition.

18. The die disc according to claim 17, **characterised in that** the outer sides of the sockets (22) and the inner sides of the accommodation bores are each at least partially not rotationally symmetric.

19. A die disc according to one of claims 17 or 18, **characterised in that** at least one projection running in the axial direction or at least one recess running in the axial direction is provided on the outer sides of the sockets (22) at a time, and that at least one recess running in the axial direction or at least one projection running in the axial direction is provided on the inner sides of the accommodation bores at a time, wherein the at least one projection and the at least one recess engage each other.

20. A die disc according to any one of claims 17 to 19, **characterised in that** a collar (26') of the sockets (22) has one flattening (38) at a time and that an accommodation (28') for the collar (26') of the sockets (22) has at least one corresponding flattening (36) at a time.

21. A rotor for a rotary tablet press, comprising a die disc according to any one of the preceding claims which is fastened on the rotor, and comprises upper and lower punches which co-operate with the sockets (22) in the operation of the rotary tablet press, in order to compact powder-shaped pressing material filled therein to yield tablets.

22. Rotor according to claim 21, **characterized in that** one of the disc halves is connected non-detachably to the rotor and the other disc half is connected detachably to the rotor.

## Revendications

1. Disque de matrice pour des douilles de matrice d'une presse rotative pour comprimés, dans lequel le disque de matrice est formé par un demi disque supérieur et un demi disque inférieur relié au demi disque supérieur, dans lesquels sont formés une pluralité de perçages (21), qui sont alignés l'un à l'autre quand les demi disques sont reliés entre eux, et forment de cette manière des perçages de logement dans lesquels une douille (22) est chaque fois arrangée, dans les douilles (22) étant tenues entre les demi disques interconnectés de manière solidaire et étant protégés contre un mouvement dans leur direction axiale par cela, les douilles (22) ayant chacune une collerette (26, 26') reçue dans un logement (28, 28') en correspondance à la collerette (26, 26'), **caractérisé en ce que** les logements (28, 28') sont à chaque fois formés par une extension étagée (28, 28') de l'extrémité des perçages (21) vis-à-vis de l'autre demi disque d'un des demi disques interconnectés.

2. Disque de matrice selon la revendication 1, **caractérisé en ce que** le disque de matrice est fait de plusieurs segments de disque (10, 10'), dans lequel les demi disques sont chacun formés par plusieurs moitiés de segment (14, 16, 16'), dans lequel deux moitiés de segment (14, 16, 16') interconnectées forment un segment de disque (10, 10').

3. Disque de matrice selon une des revendications 1 ou 2, **caractérisé en ce que** les logements (28, 28') sont formés dans au moins un des demi disques interconnectés.

4. Disque de matrice selon l'une quelconque des revendications précédentes, **caractérisé en ce qu'**au moins une couche intermédiaire (30) est chaque fois arrangée entre les demi-disques.

5. Disque de matrice selon la revendication 4, **caractérisé en ce que** l'au moins une couche intermédiaire (30) forme un joint hermétique entre les demi disques.

6. Disque de matrice selon une des revendications 4 ou 5, **caractérisé en ce que** l'au moins une couche intermédiaire (30) est élastique.

7. Disque de matrice selon l'une quelconque des revendications 4 à 6, **caractérisé en ce que** l'au moins une couche intermédiaire (30) consiste d'une matière plastique ou un matériau métallique.

8. Disque de matrice selon l'une quelconque des revendications 4 à 7, **caractérisé en ce que** les logements (28, 28') sont à chaque fois formés dans l'au moins une couche intermédiaire (30, 32).

9. Disque de matrice selon la revendication 8, **caractérisé en ce que** les logements (28, 28') sont à chaque fois formés par une encoche dans l'au moins une couche intermédiaire (30, 32).

10. Disque de matrice selon l'une quelconque des revendications 1 à 9, **caractérisé en ce que** les demi disques interconnectés ont la même épaisseur.

11. Disque de matrice selon l'une quelconque des revendications 1 à 9, **caractérisé en ce que** les demi disques interconnectés ont des épaisseurs différentes.

12. Disque de matrice selon l'une quelconque des revendications précédentes, **caractérisé en ce que** les demi disques sont interconnectés de façon séparable.

13. Disque de matrice selon l'une quelconque des revendications précédentes, **caractérisé en ce que** les demi disques sont interconnectés par coopération de forces.

14. Disque de matrice selon la revendication 13, **caractérisé en ce que** les demi disques sont interconnectés par vissage ou par rivetage.

15. Disque de matrice selon l'une quelconque des revendications précédentes, **caractérisé en ce que** les demi disques sont interconnectés par accouplement de matière.

16. Disque de matrice selon la revendication 15, **caractérisé en ce que** les demi disques sont interconnectés par une liaison soudée.

17. Disque de matrice selon l'une quelconque des revendications précédentes, **caractérisé en ce que** des moyens pour empêcher une rotation des douilles (22) dans les perçages de logement sont en outre prévus.

18. Disque de matrice selon la revendication 17, **caractérisé en ce que** les côtés extérieurs des douilles (22) et les côtés intérieurs des perçages de logement sont à chaque fois au moins partiellement non roto symétriques.

19. Disque de matrice selon une des revendications 17 ou 18, **caractérisé en ce que** au moins une saillie s'étendant dans la direction axiale ou au moins une encoche s'étendant dans la direction axiale est à chaque fois prévue sur les côtés extérieurs des douilles (22), et qu'au moins une encoche s'étendant dans la direction axiale ou au moins une saillie s'étendant dans la direction axiale est à chaque fois prévue sur les côtés intérieurs des perçages de logement, l'au moins une saillie et l'au moins une encoche s'engageant.

20. Disque de matrice selon l'une quelconque des revendications 17 à 19, **caractérisé en ce que** une collerette (26') des douilles (22) comprend à chaque fois un aplatissement (38) et qu'un logement (28') pour la collerette (26') des douilles (22) comprend à chaque fois au moins un aplatissement correspondant (36).

21. Rotor pour une presse rotative pour comprimés, comprenant un disque de matrice selon l'une quelconque des revendications précédentes qui est fixé sur le rotor, et comporte des poinçons supérieurs et inférieurs qui coopèrent avec les douilles (22) dans le fonctionnement de la presse rotative pour comprimés afin de comprimer du matériau en forme de poudre y rempli à des comprimés.

22. Rotor selon la revendication 21, **caractérisé en ce que** l'une des demi disques est non relié de façon détachable au rotor et l'autre des demi disques étant reliés de manière amovible au rotor.
